# EUROPEAN PATENT SPECIFICATION

(11) **EP 0 856 347 B1**
(45) Date of publication and mention of the grant of the patent: **11.06.2003**
(21) Application number: 98101702.3
(22) Date of filing: 02.02.1998
(51) Int. Cl.: B01D 45/06, B01D 45/08

(54) **Multifunctional filtering unit for suction and/or filtering hoods**
Multifunktionale Filtereinheit für Saug und/oder -Filterabzughaube
Unité de filtration multifunctionnelle pour hotte d'aspiration et/ou filtrante

(30) Priority: 04.02.1997 IT BO970043
(43) Date of publication of application: 05.08.1998
(73) Proprietor: Faber S.p.A., 60044 Fabriano (Ancona) (IT)
(72) Inventor: Faber S.p.A., 60044 Fabriano (Ancona) (IT)
(74) Representative: Modiano, Guido, Dr.-Ing.

(56) References cited:
- US-A- 4 690 701
- US-A- 4 830 644
- US-A- 5 342 422

## Description

The present invention relates to a multifunctional filtering unit for suction and/or filtering hoods.

It is known to use suction and/or filtering hoods which are meant to eliminate fumes and vapors produced by kitchens and the like. For this purpose, said hoods have suitable filtering means.

In particular, grilles provided with acrylic filters, meant to retain undesirable substances, are in widespread use; filtering hoods, i.e., hood with air recirculation, can also be provided with activated-charcoal filters. Such filters require periodic replacement in order to maintain the intended efficiency and offer no fire protection.

Filtering panels have also been proposed which are constituted by a multilayer metal mesh, made for example of aluminum, which are particularly suitable to retain fatty substances. Said multilayer panels do not require periodic replacement but can be washed with conventional means. However, the fact is objected that said washing often does not allow to clean the panels fully, owing to the clogging of the metal mesh. These filtering panels too do not provide fire protection, which is even worse in case of accumulation of easily flammable fats.

A problem that occurs frequently in the provision of suction and/or filtering hoods is the need to conveniently change their dimensions according to requirements, for example for small and large kitchens or other fields in general. Said filtering means in fact generally have poor modularity.

Moreover, said filtering means usually entail some difficulties in assembly which hinder cleaning and maintenance in general.

US-A-4830644 discloses a separator for gaseous fluids comprising first and second section parts each being open and trough-shaped in cross section and being mutually opposite rows with the troughs being staggered and facing one another to form flow passages of the separator. There is also provided a longitudinally extending holding element with a plurality of spaced holders which together hold the first and second section parts separately in there staggered and facing relationship.

US-A-5342422 discloses a separating apparatus in the form of a two interlocked metal sheets each including a plurality of laminas shaped and arranged mutually offset in a manner to form an air-flow chamber.

The aim of the present invention is to solve the above problems, by providing a filtering unit for suction and/or filtering hoods of the modular type which ensures broad operating functionality, particularly for the optimum filtering of fats.

Within the scope of this aim, an object of the present invention is to provide a filtering unit for suction and/or filtering hoods which allows to easily perform thorough cleaning.

Another object of the present invention is to provide a filtering unit which is simple in concept, safely reliable in operation and easy and quick to assemble as well as adapted to offer a high level of fire protection.

In accordance with the invention there is provided a multifunctional filtering unit for suction and/or filtering hoods as defined in the appended claims.

The details of the invention will become apparent from the detailed description of a preferred embodiment of the multifunctional filtering unit for suction and/or filtering hoods, illustrated only by way of non-limitative example in the accompanying drawings, wherein:
figure 1 is a front view of an ordered set of filtering units according to the invention, in the configuration for mounting on a supporting frame;
figure 2 is a longitudinal sectional view of a portion of a filtering unit, taken at the region for engaging said supporting frame;
figure 3 is a corresponding transverse sectional view thereof, taken along the plane III-III of figure 2;
figure 4 is a similar transverse sectional view of a set of filtering units which have a different embodiment, in the configuration for mounting on said supporting frame.

With particular reference to the above figures, the reference numeral 1 generally designates the multifunctional filtering unit for suction and/or filtering hoods.

The filtering unit 1 is meant to be mounted on a supporting frame 2 which has modular dimensions and is formed by two strips 3 which are connected, at their ends, with conventional screw means 4, by two cross-members 5; the strips 3 are constituted by metal profiles which are conveniently shaped. The supporting frame 2 is suitable to be mounted in a known manner on a filtering and/or suction hood.

It is of course possible to provide the frame 2 in a different manner, for example by welding the strips 3 to the cross-members 5 or by forming it from folded sheet metal on the bottom of the hood.

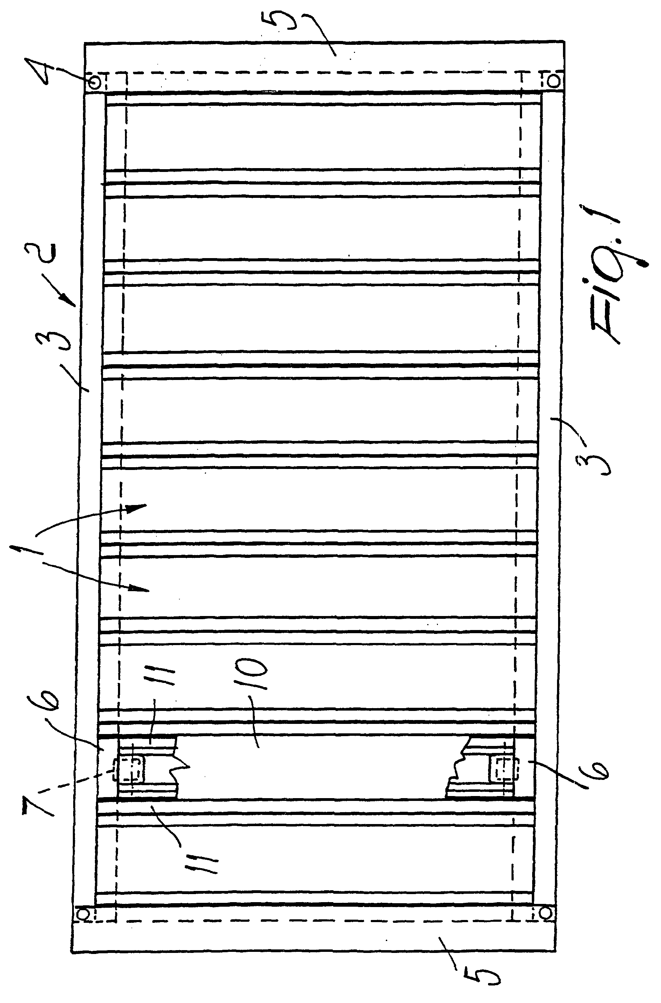

As shown in figure 1, the supporting frame 2 supports an ordered set of filtering units 1, arranged mutually side by side along the longitudinal sides, in a direction which is parallel to the cross-members 5.

Each filtering unit 1 comprises two heads 6 provided with respective coupling elements 7 for engagement with said supporting frame 2. The heads 6 are made for example of self-extinguishing plastics, pressure die-cast aluminum or the like.

The opposite ends of a central profiled element 10 and of two additional lateral profiled elements 11 are coupled to said heads 6; said central profiled element 10 forms a sort of channel which is open in an upward region, while the lateral profiled elements 11 have an angled profile and are longitudinally associated with said central profiled element 10.

The profiled elements 10 and 11 are preferably made of metal, for example steel, aluminum, sheet metal to be painted, and the like.

More particularly, the heads 6 have a body 8 which has a substantially prism-like shape and is suitable to be moved into abutment against a side wall 3a which is formed by a strip 3 of the supporting frame 2 (figure 2). A front protrusion 9 protrudes from the body 8 of the head 6 and has a cavity 12 which is open upward and in which a U-shaped portion 7a of the corresponding coupling element 7 engages.

Said coupling element 7 forms, in an upward region, a hook 7b which protrudes above the body 8 of the head 6 and whereby it is suitable to elastically engage an upper edge 3b of the strip 3 which is folded towards the inside of the supporting frame 2 with respect to the side wall 3a. The coupling element 7 is made of plastic material reinforced, on the inward side, with a core 13 made of metallic material, for example special spring steel, which is suitable to ensure high strength, elasticity and safe engagement.

The coupling element 7 is retained in the cavity 12 of the head 6 by means of a transverse pin 14 that passes through corresponding holes formed in the protrusion 9, so as to engage the folded portion 7a of said coupling element 7; the pin 14 also engages, by means of corresponding holes, said lateral profiled elements 11 of the filtering unit 1.

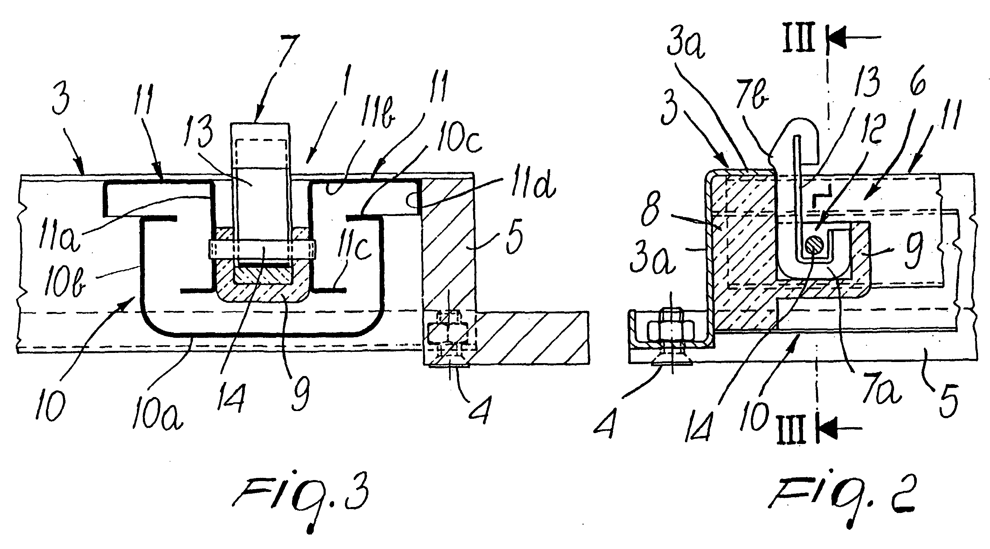

The central profiled element 10, which forms said channel which is open in an upward region, has a bottom 10a from which mutually opposite lateral sides 10b protrude; said sides have, along their longitudinal borders, lateral edges 10c which are folded inward (figure 3).

The profiled element 10 has a profile which is complementary to the profile of a portion of the body 8 of the heads 6, with which it is meant to couple at its ends.

The lateral profiled elements 11 respectively have a first portion 11a and a second portion 11b of their profile which form a right angle and have, along their longitudinal borders, corresponding edges 11c and lid folded towards the concavity.

The lateral profiled elements 11 are arranged symmetrically so as to engage the channel of the central profiled element 10 with the first portion 11a of the profile and so as to protrude above said channel with the second portion 11b, which is angled outward with respect to said first portion 11a.

More specifically, the first portion 11a of the profile of the lateral profiled elements 11 is parallel to the mutually opposite lateral side 10b of the central profiled element 10, so that the edge 11c is directed towards said side 10b; while the second portion 11b is parallel to the bottom 10a of said central profiled element 10, with the edge 11d directed downward.

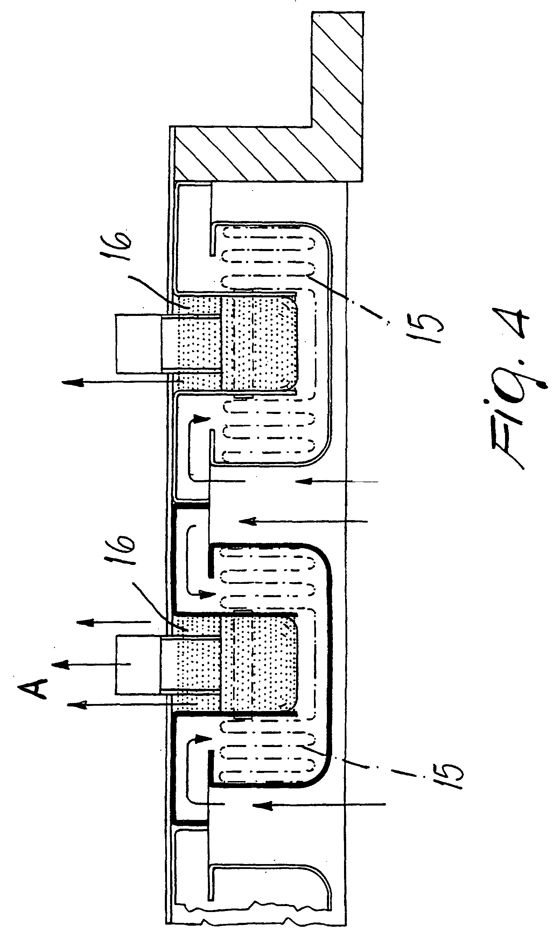

The lateral profiled elements 11 form, with respect to the central profiled element, a labyrinth-like cavity which is meant to be crossed by the fumes and vapors being aspirated through the hood. Inside said labyrinth-like cavity it is possible to accommodate, longitudinally to the filtering unit, suitable auxiliary filtering elements, as shown by the dashed line 15 in figure 4, for example filters made of multilayer metal mesh, acrylic filters, activated-charcoal filters and the like.

Preferably, activated-charcoal filters 16 are inserted at the discharge region, in the compartment formed between the mutually opposite portions 11a of the lateral profiled elements 11.

In the illustrated case, said auxiliary filtering elements 15 are arranged inside the cavities formed between the lateral sides 10b of the central profiled element 10 and the mutually opposite portions 11a of the lateral profiled elements 11; however, it is possible to arrange said auxiliary filtering elements also in the cavity formed between the portions 11b of the lateral profiled elements 11.

The lateral profiled elements 11 may also be provided without the edge 11c directed towards the side 10b of the central profiled element 10 (figure 4). This of course allows better seating of said auxiliary filtering elements 15.

Operation of the filtering unit is easily understandable from the above description.

The filtering units 1 are mounted in series on the supporting frame 2, mutually side by side along the longitudinal sides. This allows to achieve full modularity, since the supporting frame 2 can have any suitable length, according to the intended use, for suction and/or filtering hoods of small or large kitchens and other fields in general.

The mounting of the filtering units 1 on the supporting frame 2 is facilitated by the fact that it does not require screws or other similar coupling means, since said filtering units are engaged elastically with the supporting frame by means of the coupling elements 7. The individual parts of the filtering units can also be easily disassembled, if required, by disengaging the heads 6 from the profiled elements 10 and 11.

It is therefore possible to very easily and quickly achieve complete disassembly of the filtering units for periodic cleaning and maintenance operations; for example, the replacement of the auxiliary filtering elements.

It should be noted that said cleaning can be performed with conventional means, for example in washing machines. Moreover, said cleaning does not entail residues and the like, since the various parts of the filtering units, i.e., substantially, said heads and the profiled elements, have no regions that can clog.

The engagement of the filtering units on the supporting frame is very safe.

In the mounting configuration, the profiled elements 10 and 11 form a labyrinth-like path which is meant to be crossed by the fumes and vapors being aspirated through the hood, as shown by the arrows A in figure 4.

This allows to achieve an effective filtering action, particularly an optimum filtering of fats. Depending on the intended uses, it is of course possible to use auxiliary filtering elements, such as multilayer metal mesh filters, acrylic filters, activated-charcoal filters and the like.

The filtering unit according to the invention is also capable of performing excellent fire prevention. This allows to safely avoid the fire hazards linked for example to the use of acrylic filters which are exposed directly to the flame, as occurs in conventional grilles, or in multilayer filtering panels, particularly when they are clogged with fat.

In conclusion, the filtering unit according to the invention allows to achieve excellent modularity and high multifunctionality in the provision of suction and/or filtering hoods, particularly for kitchens.

Another important feature of the filtering unit according to the invention is that it has an aesthetic appearance which is preferable to that of other conventional filtering means. This is an undisputed advantage in view of its use in suction and/or filtering hoods for high-quality kitchens.

In the practical execution of the invention, the materials employed, as well as the shapes and the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A multifunctional filtering unit (1) for suction and/or filtering hoods, comprising two heads (6) provided with respective coupling elements (7) for engaging a supporting frame (2) which is suitable to support an ordered set of said filtering units (1), arranged longitudinally side by side; a central profiled element (10), which forms a channel which is open upward and is associated with said heads (6) at its opposite ends; two additional lateral profiled elements (11) which have an angled profile, are coupled to said heads (6) at their ends and are longitudinally associated with said central profiled element (10) such that said lateral profiled elements (11) form, with respect to said central profiled element (10), a labyrinth-like cavity, and said lateral profiled elements (11) being arranged symmetrically so as to engage said channel of said central profiled element (10) with a first portion (11a) of said profile and so as to protrude above said channel with a second portion (11b) which is angled outward with respect to said first portion (11a), opposite ends of said central profiled element (10) and of said two lateral profiled elements (11) being coupled to said two heads (6) so as to form a unitary filtering unit (1) which is removably coupleable, by means of said coupling elements (7) of said heads (6), individually and separately to said supporting frame (2) from other like unitary filtering units (1) each comprising themselves said two heads (6) to which are connected opposite ends of said central profiled element (10) and of said two lateral profiled elements (11).

2. A filtering unit according to claim 1, **characterized in that** said central profiled element (10) has a bottom (10a) from which mutually opposite lateral sides (10b) protrude, said sides (10b) having, along their longitudinal borders, lateral edges (10c) which are folded towards the inside of said channel.

3. A filtering unit according to claim 1, **characterized in that** in said lateral profiled elements (11), said first portion (11a) and said second portion (11b), respectively, of said profile are folded at right angles and have, along their longitudinal borders, corresponding edges (11c,11d) which are folded towards the concavity.

4. A filtering unit according to claim 1, **characterized in that** said first portion (11a) and said second portion (11b) of said profile of the lateral profiled elements (11) are parallel, respectively, to a lateral side (10b) and to a bottom (10a) of said central profiled element (10).

5. A filtering unit according to claim 1, **characterized in that** said heads (6) have a prism-shaped body (8) which is suitable to be placed in abutment with a side wall (3a) of said supporting frame (2) and from which a front protrusion (9) extends on the opposite side with respect to said side wall (3a), said front protrusion (9) having a cavity (12) which is open upward and in which said corresponding coupling element (7) is suitable to fit.

6. A filtering unit according to claim 5, **characterized in that** said coupling element (7) is retained in said cavity (12) of said head (6) by means of a transverse pin (14) which passes through corresponding holes formed in the protrusion (9), so as to engage a folded portion (7a) of said coupling element (7).

7. A filtering unit according to claim 1, **characterized in that** said coupling elements (7) form, in an upward region, a hook (7b) which protrudes above said heads (6) and whereby said coupling elements (7) are suitable to elastically engage an upper edge (3a) of said supporting frame (2), which is folded inward.

8. A filtering unit according to claim 1, **characterized in that** said coupling elements (7) are made of plastics reinforced, on the inner side, with an elastic core (13) made of metallic material.

9. A filtering unit according to claim 1, **characterized in that** auxiliary filtering elements (15) are accommodated within said labyrinth-like cavity,

## Patentansprüche

1. Multifunktionale Filtereinheit (1) für Saug- und/oder Filterabzugshauben, mit zwei Köpfen (6), die jeweils Koppelelemente (7) zum Eingreifen in einen Trägerrahmen (2) haben, der geeignet ist, einen geordneten Satz der Filterelemente (1) zu tragen, die in Längsrichtung nebeneinander angeordnet sind; einem zentralen Profilelement (10), das einen Kanal bildet, welcher nach oben offen ist und an seinen einander abgewandten Enden mit den Köpfen (6) verbunden ist; zwei zusätzlichen seitlichen Profilelementen (11), die ein abgewinkeltes Profil haben, an ihren Enden an die Köpfe (6) gekoppelt sind und in Längsrichtung derart mit dem zentralen Profilelement (10) verbunden sind, daß die seitlichen Profiletemente (11) bezüglich des zentralen Profilelements (10) einen labyrinthartigen Hohlraum bilden, und wobei die seitlichen Profilelemente (11) symmetrisch derart angeordnet sind, daß sie in den Kanal des zentralen Profilelements (10) mit einem ersten Abschnitt (11a) des Profils eingreifen und mit einem bezüglich des ersten Abschnitts (11a) nach außen abgewinkelten zweiten Abschnitt (11b) Ober den Kanal hinausragen, wobei einander abgewandte Enden des zentralen Profilelements (10) und der beiden seitlichen Profilelemente (11) an die beiden Köpfe (6) gekoppelt sind, um eine unitäre Filtereinheit (1) zu bilden, die mittels der Koppelelemente (7) der Köpfe (6) lösbar an den Trägerrahmen (2) koppelbar ist, und zwar individuell und separat von anderen gleichartigen unitären Filtereinheiten (1), die jeweils selbst zwei Köpfe (6) haben, mit denen einander abgewandte Enden des zentralen Profilelements (10) und der beiden seitlichen Profilelemente (11) verbunden sind.

2. Filtereinheit nach Anspruch 1, **dadurch gekennzeichnet, daß** das zentrale Profilelement (10) einen Boden (10a) hat, von dem einander gegenüberstehende Seiten (10b) abstehen, wobei die Seiten (10b) entlang ihren Längsrändern Seitenkanten (10c) haben, die zur Innenseite des Kanals hin umgebogen sind.

3. Filtereinheit nach Anspruch 1, **dadurch gekennzeichnet, daß** bei den seitlichen Profilelementen (11) der erste Abschnitt (11a) und der zweite Abschnitt (11b) des Profils rechtwinklig umgebogen sind und entlang ihren Längsrändern entsprechende Kanten (11c, 11d) haben, die zu dem Hohlraum hin umgebogen sind.

4. Filtereinheit nach Anspruch 1, **dadurch gekennzeichnet, daß** der erste Abschnitt (11a) und der zweite Abschnitt (11b) des Profils der seitlichen Profilelemente (11) parallel zu einem Seitenteil (10b) bzw. zu einem Boden (10a) des zentralen Profilelements (10) sind.

5. Filtereinheit nach Anspruch 1, **dadurch gekennzeichnet, daß** die Köpfe (6) jeweils einen prismenförmigen Körper (8) haben, der geeignet ist mit einer Seitenwand (3a) des Trägerrahmens (2) in Anlage gebracht zu werden und von dem an der von der Seitenwand (3a) abgewandten Seite ein vorderer Vorsprung (9) ausgeht, wobei der vordere Vorsprung (9) einen Hohlraum (12) hat, der nach oben offen ist und in den das entsprechende Koppelelement (7) paßt

6. Filtereinheit nach Anspruch 5, **dadurch gekennzeichnet, daß** das Koppelelemenl (7) mittels eines Querstifts (14), der sich durch entsprechende Löcher in dem Vorsprung (9) erstreckt, um mit einem umgebogenen Abschnitt (7a) des Koppelelements (7) in Eingriff zu treten, in dem Hohlraum (12) des Kopfs (6) gehalten ist

7. Filtereinheit nach Anspruch 1, **dadurch gekennzeichnet, daß** die Koppelelemente (7) in einem oberen Bereich jeweils einen Haken (7b) ausbilden, der über die Köpfe (6) hinausragt, wobei die Koppelelemente (7) geeignet sind, elastisch mit einer nach innen umgebogenen Oberkante (3a) des Trägerrahmens (2) in Eingriff zu treten.

8. Filtereinheit nach Anspruch 1, **dadurch gekennzeichnet, daß** die Koppelelemente (7) aus Kunststoff bestehen, der auf der Innenseite mit einem elastischen Kem (13) aus metallischem Material verstärkt ist.

9. Filtereinheit nach Anspruch 1, **dadurch gekennzeichnet, daß** zusätzliche Filterelmente (15) in dem labyrinthartigen Hohlraum angeordnet sind.

## Revendications

1. Unité de filtration multifonctionnelle (1) pour des hottes d'aspiration et/ou filtrantes, comprenant deux têtes (6) munies d'éléments de couplage respectifs (7) pour engager un bâti de support (2) qui est approprié pour supporter une série ordonnée desdites unités filtrantes (1) agencées longitudinalement côte à côte ; un élément profilé central (10), qui forme un canal qui est ouvert vers le haut et est associé auxdites têtes (6) au niveau de ses extrémités opposées ; deux éléments profilés latéraux additionnels (11), qui ont un profil de cornière, sont couplés auxdites têtes (6) au niveau de leurs extrémités et sont associés longitudinalement audit élément profilé central (10), de telle sorte que lesdits éléments profilés latéraux (11) forment, par rapport audit élément profilé central (10), une cavité en labyrinthe, et lesdits éléments profilés latéraux (11) étant agencés symétriquement de façon à engager ledit canal dudit élément profilé central (10) avec une première portion (11a) dudit profilé et de façon à faire saillie au-dessus dudit canal avec une seconde portion (11b) qui forme un angle vers l'extérieur par rapport à ladite première portion (11a), des extrémités opposées dudit élément profilé central (10) et desdits deux éléments profilés latéraux (11) étant couplées auxdites deux têtes (6) pour former une unité de filtration unitaire (1) qui peut être couplée de façon amovible, par l'intermédiaire desdits éléments de couplage (7) desdites têtes (6), individuellement et séparément audit bâti de support (2) d'autres unités de filtration unitaires analogues (1), chacune comprenant elle-même lesdites deux têtes (6) auxquelles sont reliées des extrémités opposées dudit élément profilé central (10) et desdits deux éléments profilés latéraux (11).

2. Unité de filtration selon la revendication 1,
**caractérisée en ce que** ledit élément profilé central (10) a un fond (10a) duquel font saillie des côtés latéraux mutuellement opposés (10b), lesdits côtés (10b) ayant, le long de leurs bordures longitudinales, des bords latéraux (10c) qui sont pliés vers l'intérieur dudit canal.

3. Unité de filtration selon la revendication 1,
**caractérisée en ce que**, dans lesdits éléments profilés latéraux (11), ladite première portion (11a) et ladite seconde portion (11b), respectivement, dudit profilé sont pliées à angle droit et présentent, le long de leurs bordures longitudinales, des bords correspondants (11c, 11d) qui sont pliés vers la concavité.

4. Unité de filtration selon la revendication 1,
**caractérisée en ce que** ladite première portion (11a) et ladite seconde portion (11b) dudit profilé des éléments profilés latéraux (11) sont parallèles, respectivement, à un côté latéral (10b) et à un fond (10a) dudit élément profilé central (10).

5. Unité de filtration selon la revendication 1,
**caractérisée en ce que** lesdites têtes (6) présentent un corps en forme de prisme (8) qui est approprié pour être placé en butée contre une paroi latérale (3a) dudit bâti de support (2) et à partir duquel une saillie avant (9) s'étend sur le côté opposé par rapport à ladite paroi latérale (3a), ladite saillie avant (9) ayant une cavité (12) qui est ouverte vers le haut et dans laquelle ledit élément de couplage correspondant (7) est approprié pour s'ajuster.

6. Unité de filtration selon la revendication 5,
**caractérisée en ce que** ledit élément de couplage (7) est maintenu dans ladite cavité (12) de ladite tête (6) par l'intermédiaire d'un axe transversal (14) qui traverse des trous correspondants formés dans la saillie (9), pour engager une portion pliée (7a) dudit élément de couplage (7).

7. Unité de filtration selon la revendication 1,
**caractérisée en ce que** lesdits éléments de couplage (7) forment, dans une région supérieure, un crochet (7b) qui fait saillie au-dessus desdites têtes (6) et grâce à quoi lesdits éléments de couplage (7) sont appropriés pour engager élastiquement un bord supérieur (3a) dudit bâti de support (2), qui est plié vers l'intérieur.

8. Unité de filtration selon la revendication 1,
**caractérisée en ce que** lesdits éléments de couplage (7) sont réalisés en matière plastique renforcée, sur le côté interne, avec un noyau élastique (13) réalisé en matière métallique.

9. Unité de filtration selon la revendication 1,
**caractérisée en ce que** des éléments de filtration auxiliaires (15) sont logés dans ladite cavité en labyrinthe.
